# EUROPEAN PATENT APPLICATION

(11) **EP 2 933 983 A1**
(43) Date of publication of application: **21.10.2015**
(21) Application number: 12890877.9
(22) Date of filing: 31.12.2012
(51) Int. Cl.: H04L 29/10

(54) **SYSTEM ARCHITECTURE, SUBSYSTEM, AND METHOD FOR OPENING OF TELECOMMUNICATION NETWORK CAPABILITY**

(71) Applicant: Huawei Technologies Co., Ltd., Longgang District Shenzhen, Guangdong 518129 (CN)
(72) Inventor: LI, Jian, Shenzhen Guangdong 518129 (CN); KONG, Tao, Shenzhen Guangdong 518129 (CN)
(74) Representative: Körber, Martin Hans
(86) International application number: PCT/CN2012/088134
(87) International publication number: WO 2014/101231

(57) **Abstract**

Embodiments of the present invention provide a system architecture, a subsystem, and a method for opening a telecommunications network capability, where the system includes: an API open subsystem, a telecommunications network subsystem, and a third-party subsystem. A first interface exists between the telecommunications network subsystem and the API open subsystem, and a second interface exists between the API open subsystem and the third-party subsystem; the telecommunications network subsystem is configured to provide a telecommunications network capability for the API open subsystem; the API open subsystem is configured to operate and manage opening of the telecommunications network capability and provide an API of the telecommunications network capability for the third-party subsystem; and the third-party subsystem is configured to invoke, on the API open subsystem, the API of the telecommunications network capability, where the telecommunications network capability includes a network customization capability, a telecommunications network capability invoked by the third-party subsystem according to a requirement, and/or a hosting capability. Therefore, the system architecture for opening a telecommunications network capability provided in the present invention has wide applicability and is capable of improving market competitiveness of a telecommunications operator.

## Description

### TECHNICAL FIELD

Embodiments of the present invention relate to the field of communications technologies, and in particular, to a system architecture, a subsystem, and a method for opening a telecommunications network capability.

### BACKGROUND

In IT (Information Technology, information technology) and Internet industries, platform opening is a very important trend, and each corporate giant deploys platform opening, so as to take preemptive opportunities in the industry chain. A telecommunications operator and an equipment manufacturer are faced with pressure of ICT (Information Communication Technology, information communication technology) transformation, and also start to try to deploy opening of a telecommunications network capability. However, the industry is still in an exploration phase currently and lacks a unified criterion and a mature architecture

In the prior art, an IBM's (International Business Machines Corporation, International Business Machines Corporation) IT platform open architecture that is based on an SOA (Service-oriented architecture, service-oriented architecture) idea mainly provides opening of IT resources. However, relatively little consideration is given to operation and a supporting environment, and an interface of a related telecommunications network capability is not considered, and therefore opening of the telecommunications network capability cannot be supported.

### SUMMARY

Embodiments of the present invention provide a system architecture, a subsystem, and a method for opening a telecommunications network capability, which have wide applicability, and by using an open architecture and platform, a telecommunications operator is capable of applying network assets and capabilities more sufficiently, thereby improving competitiveness in the industry chain.

In a first aspect, a system architecture for opening a telecommunications network capability is provided, where the system includes an application programming interface API open subsystem, a telecommunications network subsystem, and a third-party subsystem; a first interface exists between the telecommunications network subsystem and the API open subsystem, and a second interface exists between the API open subsystem and the third-party subsystem; the telecommunications network subsystem is configured to provide a telecommunications network capability for the API open subsystem; the API open subsystem is configured to operate and manage opening of the telecommunications network capability and provide an API of the telecommunications network capability for the third-party subsystem; and the third-party subsystem is configured to invoke, on the API open subsystem, the API of the telecommunications network capability, where the telecommunications network capability includes at least one of the following: a network customization capability, an API capability, and a hosting capability, and the API capability is the telecommunications network capability invoked by the third-party subsystem according to a requirement.

With reference to the first aspect, in a first implementation manner, the API open subsystem is further configured to operate and manage the API of the telecommunications network capability, and/or further configured to operate and manage the third party.

With reference to the first possible implementation manner of the first aspect, in a second possible implementation manner, the API open subsystem is further configured to arrange and manage the telecommunications network capability, and register and publish information about an API of the arranged and managed telecommunications network capability; and the third-party subsystem is further configured to acquire, on the API open subsystem, the information about the API of the telecommunications network capability and invoke, on the API open subsystem, the API of the telecommunications network capability according to the information about the API of the telecommunications network capability; or, the system architecture for opening a telecommunications network capability further includes an API registration and publication platform, and the API open subsystem is further configured to arrange and manage the telecommunications network capability, and send information about an API of the arranged and managed telecommunications network capability to the API registration and publication platform; the API registration and publication platform is configured to register and publish the information about the API of the telecommunications network capability; and the third-party subsystem is further configured to acquire, on the API registration and publication platform, the information about the API of the telecommunications network capability and invoke, on the API open subsystem, the API of the telecommunications network capability according to the information about the API of the telecommunications network capability.

With reference to the first aspect or the first possible implementation manner or the second possible implementation manner of the first aspect, in a third possible implementation manner, the API open subsystem is further configured to operate and manage information about subscription or registration that is performed by the third-party subsystem on the API open subsystem; the third-party subsystem is further configured to send an API purchase or subscription request message to the API open subsystem after the subscription or the registration is complete; and the API open subsystem is further configured to query, according to the API purchase or subscription request message sent by the third-party subsystem, whether API state information of the telecommunications network capability is available, and return, according to the API state information, a result for purchasing the API of the telecommunications network capability to the third-party subsystem.

With reference to the first aspect or any one of the first possible implementation manner to the third possible implementation manner of the first aspect, in a fourth possible implementation manner, the third-party subsystem is further configured to send the API open subsystem an invocation request message of the API of the telecommunications network capability before invoking, on the API open subsystem, the API of the telecommunications network capability, where the invocation request message includes information about the third party; and the API open subsystem is further configured to perform authentication and authorization for the third party according to the information about the third party, and determine, according to a result of the authentication and authorization, whether the third-party subsystem is allowed to invoke, on the API open subsystem, the API of the telecommunications network capability.

With reference to the fourth possible implementation manner of the first aspect, in a fifth possible implementation manner, the API open subsystem is further configured to, after determining that the third-party subsystem is allowed to invoke, on the API open subsystem, the API of the telecommunications network capability, route the invocation request message of the API of the telecommunications network capability and send the telecommunications network subsystem the request message for invoking the API of the telecommunications network capability; and the telecommunications network subsystem is further configured to route the invocation request message of the API of the telecommunications network capability that is sent by the API open subsystem, and implement invocation of the API of the telecommunications network capability by the third-party subsystem according to the invocation request message of the API of the telecommunications network capability.

With reference to the fifth possible implementation manner of the first aspect, in a sixth possible implementation manner, the API open subsystem is further configured to perform interface protocol conversion for the invocation request message of the API of the telecommunications network capability before sending the request message for invoking the API of the telecommunications network capability to the telecommunications network subsystem; or, in a case that an interface adaptation module or a plug-in is built in the telecommunications network subsystem, the telecommunications network subsystem is further configured to perform interface protocol conversion for the invocation request message of the API of the telecommunications network capability.

With reference to the first aspect or any one of the first possible implementation manner to the sixth possible implementation manner of the first aspect, in a seventh possible implementation manner, the third-party subsystem is further configured to define and apply for, on the API open subsystem, a network resource; the API open subsystem is further configured to send a definition of and an application for the network resource to the telecommunications network subsystem; and the telecommunications network subsystem is further configured to perform configuration for the network resource and provisioning of a service rule according to the definition of and the application for the network resource, and open a service consistent with the network resource configuration to the third-party subsystem, where the network customization capability includes the definition of the network resource.

With reference to the first aspect or any one of the first possible implementation manner to the seventh possible implementation manner of the first aspect, in an eighth possible implementation manner, the third-party subsystem is further configured to invoke, on the API open subsystem, an API of the API capability according to a service requirement, where the API capability includes an information-type capability and/or a control-type capability.

With reference to the first aspect or any one of the first possible implementation manner to the eighth possible implementation manner of the first aspect, in a ninth possible implementation manner, the third-party subsystem is further configured to use, on the API open subsystem, an API of the hosting capability to perform a calculation or resource storage.

With reference to the first aspect or any one of the first possible implementation manner to the ninth possible implementation manner of the first aspect, in a tenth possible implementation manner, the API open subsystem is further configured to perform monitoring and statistics for a process of invoking the API of the telecommunications network capability by the third-party subsystem, so as to obtain statistical information, where the statistical information is used for service level agreement SLA management and/or charging.

With reference to the first aspect or any one of the first possible implementation manner to the tenth possible implementation manner of the first aspect, in an eleventh possible implementation manner, the system further includes a business support system BSS or operation support system OSS subsystem, a third interface exists between the API open subsystem and the BSS or OSS subsystem, the API open subsystem is further configured to determine charging information of the third party according to the statistical information, and send the charging information to the BSS or OSS subsystem, and the BSS or OSS subsystem performs charging for the third party according to the charging information.

With reference to the first aspect or any one of the first possible implementation manner to the eleventh possible implementation manner of the first aspect, in a twelfth possible implementation manner, the API open subsystem is further configured to perform deregistration or service cancellation for the API of the telecommunications network capability.

With reference to the first aspect or any one of the first possible implementation manner to the twelfth possible implementation manner of the first aspect, in a thirteenth possible implementation manner, the API open subsystem is further configured to provide a supporting environment of the API of the telecommunications network capability for the third-party subsystem, where the supporting environment includes at least one of the following: an application development environment/test environment, an application execution environment, a document, a reference design, technical support, and a forum.

With reference to the first aspect or any one of the first possible implementation manner to the thirteenth possible implementation manner of the first aspect, in a fourteenth possible implementation manner, the API open subsystem is further configured to provide the API of the telecommunications network capability for the third-party subsystem in a vertical open manner and/or in a horizontal open manner, where the vertical open manner indicates that the third party is particular, and the horizontal open manner indicates that the third party is arbitrary.

With reference to the fourteenth possible implementation manner of the first aspect, in a fifteenth possible implementation manner, the particular third party is a customer cooperating closely with a telecommunications operator, and the customer cooperating closely with a telecommunications operator includes at least one of the following: an enterprise customer, an industrial customer, and a consumer of the telecommunications operator.

In a second aspect, an API open subsystem is provided and includes: an API access module, configured to acquire a telecommunications network capability provided by a telecommunications network subsystem, and configured to provide an API of the telecommunications network capability for a third-party subsystem, so that the third-party subsystem invokes, on the API open subsystem, the API of the telecommunications network capability; and an API operation and management module, configured to operate and manage opening of the telecommunications network capability acquired by the API access module, where the telecommunications network capability includes at least one of the following: a network customization capability, an API capability, and a hosting capability, and the API capability is the telecommunications network capability invoked by the third-party subsystem according to a requirement.

With reference to the second aspect, in a first possible implementation manner, the API operation and management module is further configured to operate and manage the API of the telecommunications network capability, and/or further configured to operate and manage the third party.

With reference to the first possible implementation manner of the second aspect, in a second possible implementation manner, the API open subsystem further includes an API publication platform; the API operation and management module is further configured to arrange and manage the telecommunications network capability; and the API publication platform is configured to register and publish information about an API of the arranged and managed telecommunications network capability, so that the third-party subsystem invokes, on the API open subsystem, the API of the telecommunications network capability according to the information about the API of the telecommunications network capability.

With reference to the second aspect or the first possible implementation manner or the second possible implementation manner of the second aspect, in a third possible implementation manner, the API operation and management module is further configured to operate and manage information about subscription or registration that is performed by the third-party subsystem on the API operation and management module, and after the third party completes the subscription or the registration, query, according to an API purchase or subscription request message sent by the third-party subsystem, whether API state information of the telecommunications network capability is available; and the API operation and management module is further configured to return, according to the queried API state information, a result for purchasing the API of the telecommunications network capability to the third-party subsystem.

With reference to the second aspect or any one of the first possible implementation manner to the third possible implementation manner of the second aspect, in a fourth possible implementation manner, the API access module is further configured to receive an invocation request message of the API of the telecommunications network capability that is sent by the third-party subsystem, where the invocation request message includes information about the third party; and the API operation and management module is further configured to perform authentication and authorization for the third party according to the information about the third party, and determine, according to a result of the authentication and authorization, whether the third-party subsystem is allowed to invoke, on the API access module, the API of the telecommunications network capability.

With reference to the fourth possible implementation manner of the second aspect, in a fifth possible implementation manner, the API access module is further configured to, after the API operation and management module determines that the third-party subsystem is allowed to invoke, on the API access module, the API of the telecommunications network capability, route the invocation request message of the API of the telecommunications network capability and send the telecommunications network subsystem the request message for invoking the API of the telecommunications network capability, so that the telecommunications network subsystem routes the invocation request message of the API of the telecommunications network capability, and implements invoking of the API of the telecommunications network capability by the third-party subsystem according to the invocation request message of the API of the telecommunications network capability.

With reference to the fifth possible implementation manner of the second aspect, in a sixth possible implementation manner, the API access module is further configured to perform interface protocol conversion for the invocation request message of the API of the telecommunications network capability before sending the request message for invoking the API of the telecommunications network capability to the telecommunications network subsystem.

With reference to the second aspect or any one of the first possible implementation manner to the sixth possible implementation manner of the second aspect, in a seventh possible implementation manner, the API access module is further configured for the third-party subsystem to define and apply for a network resource, and sends a definition of and an application for the network resource to the telecommunications network subsystem, so that the telecommunications network subsystem performs configuration for the network resource and provisioning of a service rule according to the definition of and the application for the network resource, and opens a service consistent with the network resource configuration to the third-party subsystem, where the network customization capability includes the definition of the network resource; or, the API access module is further configured for the third-party subsystem to invoke, on the API access module, the API capability according to a service requirement, where the API capability includes an information-type capability and/or a control-type capability; and the API access module is further configured for the third-party subsystem to use, on the API access module, the hosting capability to perform a calculation or resource storage.

With reference to the second aspect or any one of the first possible implementation manner to the seventh possible implementation manner of the second aspect, in an eighth possible implementation manner, the API operation and management module is further configured to perform monitoring and statistics for a process of invoking the API of the telecommunications network capability by the third-party subsystem, so as to obtain statistical information, where the statistical information is used for service level agreement SLA management and/or charging.

With reference to the second aspect or any one of the first possible implementation manner to the eighth possible implementation manner of the second aspect, in a ninth possible implementation manner, the API operation and management module is further configured to perform deregistration or service cancellation for the API of the telecommunications network capability.

With reference to the second aspect or any one of the first possible implementation manner to the ninth possible implementation manner of the second aspect, in a tenth possible implementation manner, the API open subsystem further includes an API supporting environment module, and the API supporting environment module is further configured to provide a supporting environment of the API of the telecommunications network capability for the third-party subsystem, where the supporting environment includes at least one of the following: an application development environment/test environment, an application execution environment, a document, a reference design, technical support, and a forum.

With reference to the second aspect or any one of the first possible implementation manner to the tenth possible implementation manner of the second aspect, in an eleventh possible implementation manner, the API access module is further configured to provide the API of the telecommunications network capability for the third-party subsystem in a vertical open manner and/or in a horizontal open manner, where the vertical open manner indicates that the third party is particular, and the horizontal open manner indicates that the third party is arbitrary.

In a third aspect, a method for opening a telecommunications network capability is provided and includes: providing, by the telecommunications network subsystem, a telecommunications network capability for the API open subsystem; operating and managing, by the API open subsystem, opening of the telecommunications network capability and providing an API of the telecommunications network capability for the third-party subsystem; invoking, by the third-party subsystem and on the API open subsystem, the API of the telecommunications network capability, where the telecommunications network capability includes at least one of the following: a network customization capability, an API capability, and a hosting capability, and the API capability is the telecommunications network capability invoked by the third-party subsystem according to a requirement.

With reference to the third aspect, in a first possible implementation manner, specific implementation of the operating and managing, by the API open subsystem, opening of the telecommunications network capability may be: operating and managing, by the API open subsystem, the API of the telecommunications network capability, and/or operating and managing the third party.

With reference to the first possible implementation manner of the third aspect, in a second possible implementation manner, specific implementation of the operating and managing, by the API open subsystem, the API of the telecommunications network capability may be: arranging and managing, by the API open subsystem, the telecommunications network capability, and registering and publishing information about an API of the arranged and managed telecommunications network capability; and acquiring, by the third-party subsystem and on the API open subsystem, the information about the API of the telecommunications network capability, and invoking, on the API open subsystem, the API of the telecommunications network capability according to the information about the API of the telecommunications network capability; or, arranging and managing, by the API open subsystem, the telecommunications network capability, and sending information about an API of the arranged and managed telecommunications network capability to the API registration and publication platform; registering and publishing, by the API registration and publication platform, the information about the API of the telecommunications network capability; and acquiring, by the third-party subsystem and on the API registration and publication platform, the information about the API of the telecommunications network capability, and invoking, on the API open subsystem, the API of the telecommunications network capability according to the information about the API of the telecommunications network capability.

With reference to the third aspect or the first possible implementation manner or the second possible implementation manner of the third aspect, in a third possible implementation manner, specific implementation of the operating and managing, by the API open subsystem, the third party may be: operating and managing, by the API open subsystem, information about subscription or registration that is performed by the third-party subsystem on the API open subsystem; after the subscription or the registration is complete, sending, by the third-party subsystem, an API purchase or subscription request message to the API open subsystem; and querying, by the API open subsystem according to the API purchase or subscription request message sent by the third-party subsystem, whether API state information of the telecommunications network capability is available; and after operating and managing, by the API open subsystem, the third party, specific implementation may be: returning, according to the API state information, a result for purchasing the API of the telecommunications network capability to the third-party subsystem.

With reference to the third aspect or any one of the first possible implementation manner to the third possible implementation manner of the third aspect, in a fourth possible implementation manner, before invoking, by the third-party subsystem and on the API open subsystem, the API of the telecommunications network capability, specific implementation may be: sending, by the third-party subsystem, an invocation request message of the API of the telecommunications network capability to the API open subsystem, where the invocation request message includes information about the third party; and performing, by the API open subsystem, authentication and authorization for the third party according to the information about the third party, and determining, according to a result of the authentication and authorization, whether the third-party subsystem is allowed to invoke, on the API open subsystem, the API of the telecommunications network capability.

With reference to the fourth possible implementation manner of the third aspect, in a fifth possible implementation manner, specific implementation may be: routing, by the API open subsystem, the invocation request message of the API of the telecommunications network capability after determining that the third-party subsystem is allowed to invoke, on the API open subsystem, the API of the telecommunications network capability, and sending the request message for invoking the API of the telecommunications network capability to the telecommunications network subsystem; and routing, by the telecommunications network subsystem, the invocation request message of the API of the telecommunications network capability that is sent by the API open subsystem, and implementing invoking of the API of the telecommunications network capability by the third-party subsystem according to the invocation request message of the API of the telecommunications network capability.

With reference to the fifth possible implementation manner of the third aspect, in a sixth possible implementation manner, before sending, by the API open subsystem, the telecommunications network subsystem the request message for invoking the API of the telecommunications network capability, specific implementation may be: performing, by the API open subsystem, interface protocol conversion for the invocation request message of the API of the telecommunications network capability.

With reference to the fifth possible implementation manner of the third aspect, in a seventh possible implementation manner, after sending, by the API open subsystem, the telecommunications network subsystem the request message for invoking the API of the telecommunications network capability, specific implementation may be: performing, by the telecommunications network subsystem, interface protocol conversion for the invocation request message of the API of the telecommunications network capability.

With reference to the third aspect or any one of the first possible implementation manner to the seventh possible implementation manner of the third aspect, in an eighth possible implementation manner, specific implementation of the invoking, by the third-party subsystem and on the API open subsystem, the API of the telecommunications network capability may be: defining and applying for, by the third-party subsystem and on the API open subsystem, a network resource; sending, by the API open subsystem, a definition of and an application for the network resource to the telecommunications network subsystem; and performing, by the telecommunications network subsystem, configuration for the network resource and provisioning of a service rule according to the definition of and the application for the network resource, and opening a service consistent with the network resource configuration to the third-party subsystem, where the network customization capability includes the definition of the network resource.

With reference to the third aspect or any one of the first possible implementation manner to the eighth possible implementation manner of the third aspect, in a ninth possible implementation manner, specific implementation of the invoking, by the third-party subsystem and on the API open subsystem, the API of the telecommunications network capability may be: invoking, by the third-party subsystem and on the API open subsystem, an API of the API capability according to a service requirement, where the API capability includes an information-type capability and/or a control-type capability.

With reference to the third aspect or any one of the first possible implementation manner to the ninth possible implementation manner of the third aspect, in a tenth possible implementation manner, specific implementation of the invoking, by the third-party subsystem and on the API open subsystem, the API of the telecommunications network capability may be: using, by the third-party subsystem and on the API open subsystem, an API of the hosting capability to perform a calculation or resource storage.

With reference to the third aspect or any one of the first possible implementation manner to the tenth possible implementation manner of the third aspect, in an eleventh possible implementation manner, specific implementation of the operating and managing, by the API open subsystem, the API of the telecommunications network capability and the third party may be: performing, by the API open subsystem, monitoring and statistics for a process of invoking the API of the telecommunications network capability by the third-party subsystem, so as to obtain statistical information, where the statistical information is used for service level agreement SLA management and/or charging.

With reference to the third aspect or any one of the first possible implementation manner to the eleventh possible implementation manner of the third aspect, in a twelfth possible implementation manner, specific implementation may be: determining, by the API open subsystem, charging information of the third party according to the statistical information, and sending the charging information to a business support system BSS or operation support system OSS subsystem; and performing, by the BSS or OSS subsystem, charging for the third party according to the charging information.

With reference to the third aspect or any one of the first possible implementation manner to the twelfth possible implementation manner of the third aspect, in a thirteenth possible implementation manner, specific implementation may be: performing, by the API open subsystem, deregistration or service cancellation for the API of the telecommunications network capability.

With reference to the third aspect or any one of the first possible implementation manner to the thirteenth possible implementation manner of the third aspect, in a fourteenth possible implementation manner, specific implementation may be: providing, by the API open subsystem, a supporting environment of the API of the telecommunications network capability for the third-party subsystem, where the supporting environment includes at least one of the following: an application development environment/test environment, an application execution environment, a document, a reference design, technical support, and a forum.

With reference to the third aspect or any one of the first possible implementation manner to the fourteenth possible implementation manner of the third aspect, in a fifteenth possible implementation manner, specific implementation of the providing, by the API open subsystem, an API of the telecommunications network capability for the third-party subsystem may be: providing, by the API open subsystem, the API of the telecommunications network capability for the third-party subsystem in a vertical open manner and/or in a horizontal open manner, where the vertical open manner indicates that the third party is particular, and the horizontal open manner indicates that the third party is arbitrary.

With reference to the fifteenth possible implementation manner of the third aspect, in a sixteenth possible implementation manner, the particular third party is a customer cooperating closely with a telecommunications operator, and the customer cooperating closely with a telecommunications operator includes at least one of the following: an enterprise customer, an industrial customer, and a consumer of the telecommunications operator.

The system architecture for opening a telecommunications network capability in the embodiments of the present invention includes an application programming interface API open subsystem, a telecommunications network subsystem, and a third-party subsystem, where the API open subsystem is configured to operate and manage opening of a telecommunications network capability, and open, to the third-party subsystem, an API of a telecommunications network capability acquired from the telecommunications network subsystem, and the third-party subsystem is configured to invoke, on the API open subsystem, the API of the telecommunications network capability, where the telecommunications network capability includes at least one of the following: a network customization capability, an API capability, and a hosting capability, and the API capability is the telecommunications network capability invoked by the third-party subsystem according to a requirement. Based on the foregoing solutions, the system architecture for opening a telecommunications network capability is further improved by using an API open subsystem to operate and manage opening of a telecommunications network capability, and the telecommunications network capability is classified, so that invocation by a third party subsystem can be convenient and flexible. Therefore, the system architecture for opening a telecommunications network capability provided in the present invention has wide applicability and is capable of improving market competitiveness of a telecommunications operator.

### BRIEF DESCRIPTION OF DRAWINGS

To describe the technical solutions in the embodiments of the present invention more clearly, the following briefly introduces accompanying drawings required for describing the embodiments or the prior art. Apparently, the accompanying drawings in the following description show merely some embodiments of the present invention, and a person of ordinary skill in the art may still derive other drawings according to these accompanying drawings without creative efforts.
FIG. 1 is a schematic block diagram of a system architecture for opening a telecommunications network capability according to an embodiment of the present invention;
FIG. 2 is a schematic block diagram of a system architecture for opening a telecommunications network capability according to another embodiment of the present invention;
FIG. 3 is a schematic block diagram of a system architecture for opening a telecommunications network capability according to another embodiment of the present invention;
FIG. 4 is a schematic structural diagram of an API open subsystem according to an embodiment of the present invention;
FIG. 5 is a schematic structural diagram of an API open subsystem according to another embodiment of the present invention;
FIG. 6 is a schematic structural diagram of an API open subsystem according to another embodiment of the present invention;
FIG. 7 is a flowchart of a method for opening a telecommunications network capability according to an embodiment of the present invention; and
FIG. 8 is a schematic flowchart of a process of a method for opening a telecommunications network capability according to an embodiment of the present invention.

### DESCRIPTION OF EMBODIMENTS

The technical solutions in the embodiments of the present invention may be applied to various communications systems, such as a global system for mobile communications (Global System of Mobile communication, "GSM" for short), a code division multiple access (Code Division Multiple Access, "CDMA" for short) system, a wideband code division multiple access (Wideband Code Division Multiple Access, "WCDMA" for short) system, a general packet radio service (General Packet Radio Service, "GPRS" for short), a long term evolution (Long Term Evolution, "LTE" for short) system, an LTE frequency division duplex (Frequency Division Duplex, "FDD" for short) system, LTE time division duplex (Time Division Duplex, "TDD" for short), a universal mobile telecommunication system (Universal Mobile Telecommunication System, "UMTS" for short), a worldwide interoperability for microwave access (Worldwide Interoperability for Microwave Access, "WiMAX" for short) communications system, or wireless fidelity (Wireless Fidelity, "WiFi" for short).

A user equipment (UE, User Equipment) may also be called a mobile terminal (Mobile Terminal), a mobile user equipment, or the like. It may communicate with one or more core networks through a radio access network (for example, RAN, Radio Access Network). The user equipment may be a mobile terminal, such as a mobile phone (or called a "cellular" phone) or a computer equipped with a mobile terminal. For example, the user equipment may be a portable, pocket-type, handheld, computer-embedded, or vehicle-mounted mobile apparatus, which exchanges language and/or data with the radio access network.

In the embodiments of the present invention, a connection between a component and another component (for example, between subsystems or modules of the present invention) may include a connection in a wired and/or wireless manner. The wired manner may include but is not limited to a cable formed by various media, such as an optical fiber, a conductive cable, or a semiconductor line, or include other forms, such as an internal bus, a circuit, and a backplane. The wireless manner is a connection manner capable of implementing radio communication, including but not limited to radio frequency, infrared ray, and Bluetooth. An internal or external interface may exist between two components, and the interface may be a physical interface or a logical interface.

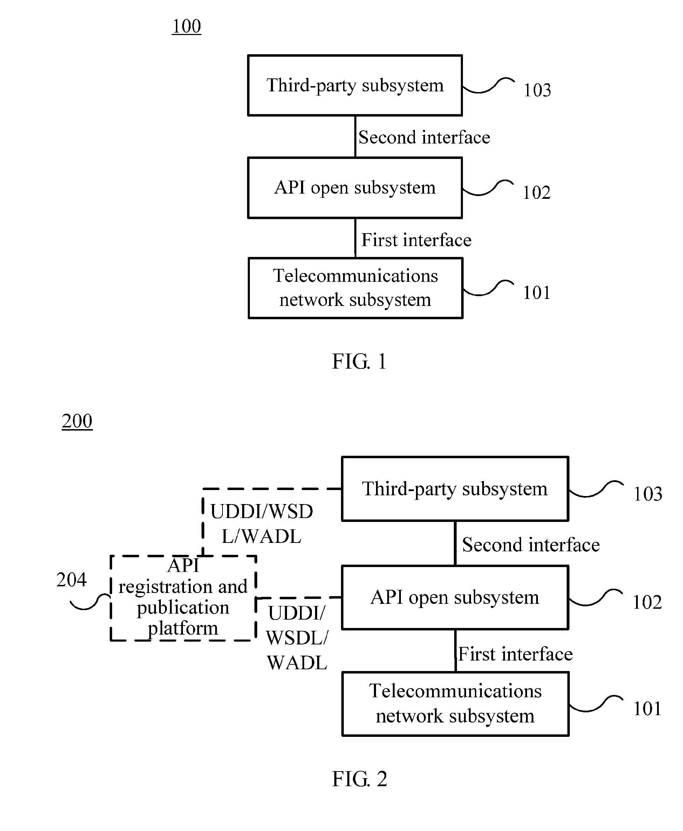

FIG. 1 is a schematic block diagram of a system architecture for opening a telecommunications network capability according to an embodiment of the present invention. The system architecture 100 for opening a telecommunications network capability in FIG. 1 includes a telecommunications network subsystem 101, an API (Application Programming Interface, application programming interface) open subsystem 102, and a third-party subsystem 103. A first interface exists between the telecommunications network subsystem 101 and the API open subsystem 102 (that is, connected through the first interface), and a second interface exists between the API open subsystem 102 and the third-party subsystem 103.

The telecommunications network subsystem 101 is configured to provide a telecommunications network capability for the API open subsystem 102.

Based on a communications network (also called a "telecommunications network pipe", such as a wireless network or a fixed network) of a telecommunications operator, the telecommunications network subsystem 101 is capable of implementing a telecommunications network capability by using a technology such as an enhanced or updated function, process interaction, or an interface. Therefore, a telecommunications network pipe is a basis of opening of the telecommunications network capability.

An interface protocol that may be used by the first interface between the telecommunications network subsystem 101 and the API open subsystem 102 includes but is not limited to GTP (GPRS (General Packet Radio Service, general packet radio service) Tunnel Protocol, GPRS tunnel protocol), SOAP (Simple Object Access Protocol, simple object access protocol), REST (Representation State Transfer, representation state transfer), MAP (Manufacturing Automation Protocol, manufacturing automation protocol), XMPP (The Extensible Messaging and Presence Protocol, extensible messaging and presence protocol), the Diameter (Diameter) protocol, or the like, which implements transfer of the telecommunications network capability to the API open subsystem 102.

The API open subsystem 102 is configured to operate and manage the opening of the telecommunications network capability and provide an API of the telecommunications network capability for the third-party subsystem 103.

The API open subsystem 102 is also an open platform of the telecommunications network capability and completes operation and management of the opening of the telecommunications network capability. The telecommunications network subsystem 101 opens the telecommunications network capability for the third-party subsystem by using the API open subsystem 102.

An interface protocol that may be used by the second interface between the API open subsystem 102 and the third-party subsystem 103 includes but is not limited to HTTP (Hypertext transfer protocol, hypertext transfer protocol), UDDI (Universal Description, Discovery and Integration, universal description, discovery and integration), WSDL (Web Services Description Language, web services description language), WADL (Web Application Description Language, web application description language), SOAP, REST, or the like, which implements the API for providing the telecommunications network capability for the third-party subsystem 103.

In addition, the API open subsystem 102 may be configured to convert the telecommunications network capability into a corresponding API of the telecommunications network capability, or the telecommunications network subsystem 101 implements conversion between the telecommunications network capability and the corresponding API, which serve as two implementation manners provided in the present invention.

The third-party subsystem 103 is configured to invoke, on the API open subsystem 102, the API of the telecommunications network capability.

The third-party subsystem 103 may be in a form of a device, such as a service application device or a user equipment. The third-party subsystem 103 may be in a form of a person, such as an SP (Service Provider, service provider) or a consumer of a telecommunications operator. In the following, a third party refers to a customer for which the telecommunications network capability is opened, and may be in a form of a person or an organization/institution, such as an SP, an enterprise customer, an industrial customer, a long-tail-type service customer, or a consumer of a telecommunications operator. It should be understood that the embodiment of the present invention sets no limitation thereto.

It should be understood that one API open subsystem may open an API of a telecommunications network capability for one or more third-party subsystems, and one telecommunications network subsystem may provide a telecommunications network capability for one or more API open subsystems.

The telecommunications network capability includes at least one of the following: a network customization capability, an API capability, and a hosting capability, and the API capability is the telecommunications network capability invoked by the third party according to a requirement.

In the present invention, the telecommunications network capability is classified into three types, that is, a network customization capability, an API capability, and a hosting (Hosting) capability. The network customization capability may be an attribute of the telecommunications network capability that is defined by the third-party subsystem 103. The API capability is the telecommunications network capability (which can be directly invoked by the third-party subsystem 103 on the API open subsystem 102) invoked by the third-party subsystem 103 according to a requirement. The API capability may be an information-type capability or a control-type capability, which is not limited in the embodiment of the present invention. Invoking, by the third-party subsystem 103 and on the API open subsystem 102, an API of the hosting capability is that the third-party subsystem 103 uses a hosting environment provided by the API open subsystem 102; for example, the hosting capability may be a device resource and an environment provided by a telecommunications network.

Based on the foregoing solution, the system architecture for opening a telecommunications network capability is further improved by using an API open subsystem to operate and manage opening of a telecommunications network capability, and the telecommunications network capability is classified, so that invoking by a third party subsystem can be convenient and flexible. Therefore, the system architecture for opening a telecommunications network capability provided in the present invention has wide applicability and is capable of improving market competitiveness of a telecommunications operator.

As another embodiment of the present invention, functions of the telecommunications network subsystem 101, the API open subsystem 102, and the third-party subsystem 103 of the system may be further extended.

Exemplarily, the API open subsystem 102 may be further configured to operate and manage an API of a telecommunications network capability, and/or the API open subsystem 102 may be further configured to operate and manage a third party. For example, management is performed for a life cycle of the API of the telecommunications network capability (that is, registration and publication of the API, arrangement of the API, deregistration or service cancellation of the API, and the like). For another example, management of an authentication and authorization policy is performed for the third party, management is performed for information about subscription and purchase (subscription) of the third party, or monitoring and statistics are performed in a process of invoking the API of the telecommunications network capability by the third-party subsystem 103. It should be understood that the foregoing examples are merely exemplary, and are not intended to limit the scope of the present invention.

Optionally, the API open subsystem 102 may be further configured to arrange and manage the telecommunications network capability (for example, multiple telecommunications network capabilities are arranged and configured as one or more APIs according to a requirement), and register and publish information about an API of the arranged and managed telecommunications network capability (such as a capability category to which the API belongs, an owned function, a using method, or an interface format), so that the third-party subsystem 103 is configured to invoke, on the API open subsystem, the API of the telecommunications network capability according to the information about the API of the telecommunications network capability. Optionally, an API registration and publication platform may be external, as shown in FIG. 2; that is, the system architecture 100 for opening a telecommunications network capability may further include an API registration and publication platform 204. The API open subsystem 102 sends information about an API of the arranged and managed telecommunications network capability to the API registration and publication platform 204, and the third-party subsystem 103 may be further configured to acquire the information about the API of the telecommunications network capability from the API registration and publication platform 204. Optionally, an interface protocol that may be used between the API open subsystem 102 and the API registration and publication platform 204 includes but is not limited to UDDI, WSDL, WADL, or the like. The information about the API of the telecommunications network capability may also be registered and published on the API registration and publication platform 204 by using a manual setting manner. An interface protocol (that is, the second interface) that may be used between the API registration and publication platform 204 and the third-party subsystem 103 includes but is not limited to UDDI, WSDL, WADL, or the like.

Optionally, the API open subsystem 102 may be further configured to manage information about subscription or registration that is performed by the third-party subsystem 103 on the API open subsystem 102. The third-party subsystem 103 is further configured to send an API purchase or subscription request message to the API open subsystem 102 after the subscription or the registration is complete. The API open subsystem 102 may be further configured to manage API purchase or subscription information, specifically, query, according to the API purchase or subscription request message sent by the third-party subsystem 103, whether API state information of the telecommunications network capability is available, and return, according to the API state information, a result for purchasing the API of the telecommunications network capability to the third-party subsystem 103. It should be understood that the third party may complete the subscription on the API open subsystem 102 by using the third-party subsystem 103 or complete the subscription in a telecommunications network business hall in written form, which is not limited in the embodiment of the present invention.

Optionally, the API open subsystem 102 may be further configured to perform deregistration or service cancellation for the API of the telecommunications network capability. For example, when the number of times an API of a telecommunications network capability is invoked is very small and the telecommunications network subsystem no longer provides the telecommunications network capability, the API open subsystem 102 may be further configured to perform deregistration or service cancellation for the API of the telecommunications network capability.

Exemplarily, the third-party subsystem 103 may be further configured to send an invocation request message of the API of the telecommunications network capability to the API open subsystem 102 before invoking, on the API open subsystem 102, the API of the telecommunications network capability, where the invocation request message includes information about the third party. The API open subsystem 102 may be further configured to perform authentication and authorization for the third party according to the information about the third party, and determine, according to a result of the authentication and authorization, whether the third-party subsystem 103 is allowed to invoke, on the API open subsystem 102, the API of the telecommunications network capability.

Further, the API open subsystem 102 may be further configured to route (that is, address) the invocation request message of the API of the telecommunications network capability after determining that the third-party subsystem 103 is allowed to invoke, on the API open subsystem 102, the API of the telecommunications network capability. Optionally, if the API is an API of multiple combined telecommunications network capabilities, the multiple telecommunications network capabilities may be separately acquired according to API arrangement and management information, and the request message for invoking the API of the telecommunications network capability is sent to the telecommunications network subsystem 101. The telecommunications network subsystem 101 may be further configured to route the invocation request message of the API of the telecommunications network capability sent by the API open subsystem 102, find a telecommunications network device (such as an RNC (Radio Access Network, radio access network) or a GGSN (Gateway GPRS Support Node, gateway GPRS (General Packet Radio Service, General Packet Radio Service) support node)) in which the telecommunications network capability corresponding to the API requested by the third-party subsystem 103 resides, and implement invocation of the API of the telecommunications network capability by the third-party subsystem 103 according to the invocation request message of the API of the telecommunications network capability. Optionally, interface protocol conversion of the first interface may be implemented by the API open subsystem 102, or interface protocol conversion of the first interface may be implemented by the telecommunications network subsystem 101. Specifically, the API open subsystem 102 may be further configured to perform interface protocol conversion (that is, implementing conversion between different interface protocols) for the invocation request message of the API of the telecommunications network capability before sending the telecommunications network subsystem 101 the request message for invoking the API of the telecommunications network capability. Or, in a case that an interface adaptation module or a plug-in is built in the telecommunications network subsystem 101, the telecommunications network subsystem 101 may be further configured to perform interface protocol conversion for the invocation request message of the API of the telecommunications network capability.

Exemplarily, the network customization capability may be a capability for defining and applying for a network resource by the third party subsystem 103, the network resource such as a bandwidth, a connection manner, a traffic filtering rule, a service rule, or a static QoS (Quality of service, quality of service). Specifically, the third-party subsystem 103 may be further configured to define and apply for, on the API open subsystem 102, the network resource, and the API open subsystem 102 may be further configured to send a definition of and an application for the network resource to the telecommunications network subsystem 101. The telecommunications network subsystem 101 may be further configured to perform configuration for the network resource and provisioning of a service rule according to the definition of and the application for the network resource, and open a service consistent with the network resource for the third-party subsystem.

Exemplarily, the third-party subsystem 103 may be further configured to dynamically invoke, on the API open subsystem 102, the API capability according to a service requirement (for example, implementing dynamic QoS control, acquiring network state information or context information, or performing charging).

Exemplarily, the third-party subsystem 103 may be further configured to invoke, on the API open subsystem 102, the API of the hosting capability, that is, the third-party subsystem 103 may use a hosting environment provided by the API open subsystem 102; for example, the hosting capability may be a device, such as a server, provided by an application telecommunications network. The third-party subsystem 103 is further configured to use the server via the API open subsystem 102, to perform a calculation, resource storage, or the like.

Therefore, the third-party subsystem in the embodiment of the present invention is capable of invoking, on the API open subsystem, the API of the telecommunications network capability conveniently and flexibly, and further capable of enriching customer service experience.

In addition, the API open subsystem 102 not only opens the API of the foregoing telecommunications network capability, but may also open an IT (Information Technology, information technology) resource and the like, so that the system architecture for opening a telecommunications network capability has compatibility.

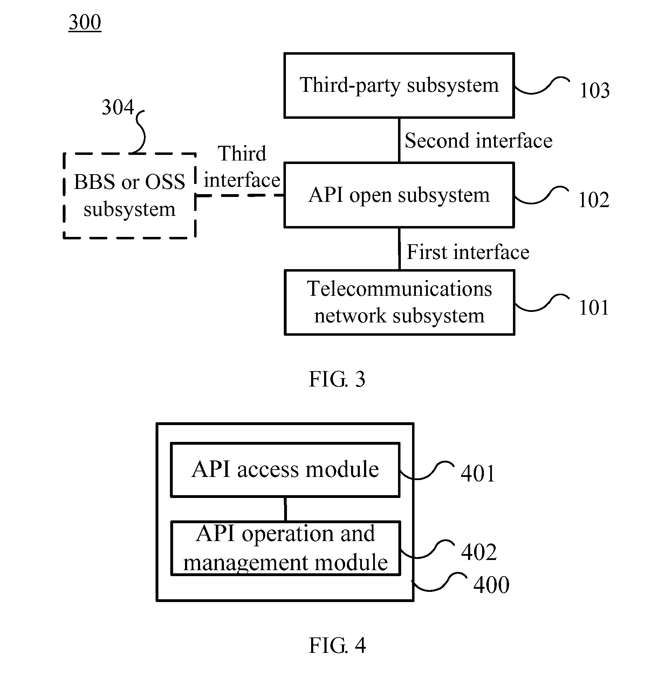

Exemplarily, the API open subsystem 102 may be further configured to perform monitoring and statistics for a process of invoking the API of the telecommunications network capability by the third-party subsystem 103, so as to obtain statistical information (for example, the number of times the API of the telecommunications network capability is invoked or time for using the hosting capability), where the statistical information may be used for SLA (Service Level Agreement, service level agreement) management and/or charging. Further, as shown in FIG. 3, the system architecture 100 for opening a telecommunications network capability may further include a BSS (Business Support System, business support system) or OSS (Operation Support System, operation support system) subsystem 304. A third interface exists between the API open subsystem 102 and the BSS or OSS subsystem 304, and an interface protocol (the third interface) that may be used between the API open subsystem 102 and the BSS or OSS subsystem 304 includes but is not limited to SOAP, FTP (File Transfer Protocol, File Transfer Protocol), or the like. The API open subsystem 102 may be further configured to determine charging information of the third party according to the statistical information, and send the charging information to the BSS or OSS subsystem 304. The BSS or OSS subsystem 304 performs charging for the third party according to the charging information (for example, performing account reconciliation, settlement, or bill processing for the third party). Optionally, the API open subsystem 102 may be further configured to send the statistical information to CRM (Custom Relation Management, customer relationship management) of the BSS or OSS subsystem 304, where the CRM is used for the SLA management, including but not limited to estimation about the API of the telecommunications network capability, processing of a customer complaint, or the like). In addition, the BSS or OSS subsystem 304 may be further configured to, according to the network customization capability requested by the third party, perform network configuration and implement provisioning of a service rule.

Exemplarily, the API open subsystem 102 may be further configured to provide a supporting environment of the API of the telecommunications network capability for the third-party subsystem 103, where the supporting environment may include at least one of the following: an application development environment/test environment, an application execution environment, a document, a reference design, technical support, a forum, and the like. Certainly, the supporting environment of the API of the telecommunications network capability may also be provided by the API registration and publication platform 204. It should be understood that the embodiment of the present invention sets no limitation thereto.

Exemplarily, the API open subsystem 102 may further provide the API of the telecommunications network capability for the third-party subsystem 103 in a vertical open manner and/or in a horizontal open manner. The vertical open manner indicates that the third party is particular, and the horizontal open manner indicates that the third party is arbitrary. The particular third party may be a customer cooperating closely with a telecommunications operator, and the customer cooperating closely with a telecommunications operator may include at least one of the following: an enterprise customer, an industrial customer, a consumer of the telecommunications operator, and the like. In the horizontal open manner, the third party is arbitrary and may include the foregoing particular third party and may also include an uncertain third party, such as a long-tail-type service customer. For example, the API open subsystem 102 opens a certain network customization capability to a particular third party (for example, a third party with a large degree of customization), which is called the vertical open manner. Specifically, the API open subsystem 102 may authenticate a third party. If the third party is a particular third party, the API open subsystem 102 may determine that the third-party subsystem is allowed to define and apply for the network customization capability.

In this way, by using an open architecture and platform, the telecommunications operator is capable of applying network assets and capabilities more sufficiently and is capable of increasing commercial application value, thereby improving competitiveness in the industry chain.

In addition, functions, such as decoupling, network shielding, and protection, may also be implemented between different subsystems; for example, the telecommunications network subsystem 101 implements decoupling, network shielding, or the like between the telecommunications network subsystem 101 and the API open subsystem 102, thereby improving security of the system architecture for opening a telecommunications network capability in commercial use.

FIG. 4 is a schematic structural diagram of an API open subsystem according to an embodiment of the present invention. The API open subsystem 400 in FIG. 4 serves as an example of the API open subsystem and includes an API access module 401 and an API operation and management module 402.

The API access module 401 is configured to acquire a telecommunications network capability provided by a telecommunications network subsystem, and configured to provide an API of the telecommunications network capability for a third-party subsystem, so that the third-party subsystem invokes, on the API access module 401, the API of the telecommunications network capability.

The API operation and management module 402 is configured to operate and manage opening of the telecommunications network capability acquired by the API access module 401.

The telecommunications network capability includes at least one of the following: a network customization capability, an API capability, and a hosting capability, and the API capability is the telecommunications network capability invoked by the third-party subsystem according to a requirement.

Based on the foregoing solution, the system architecture for opening a telecommunications network capability is further improved by using an API open subsystem to operate and manage opening of a telecommunications network capability, and the telecommunications network capability is classified, so that invoking by a third party subsystem can be convenient and flexible. Therefore, the system architecture for opening a telecommunications network capability provided in the present invention has wide applicability and is capable of improving market competitiveness of a telecommunications operator.

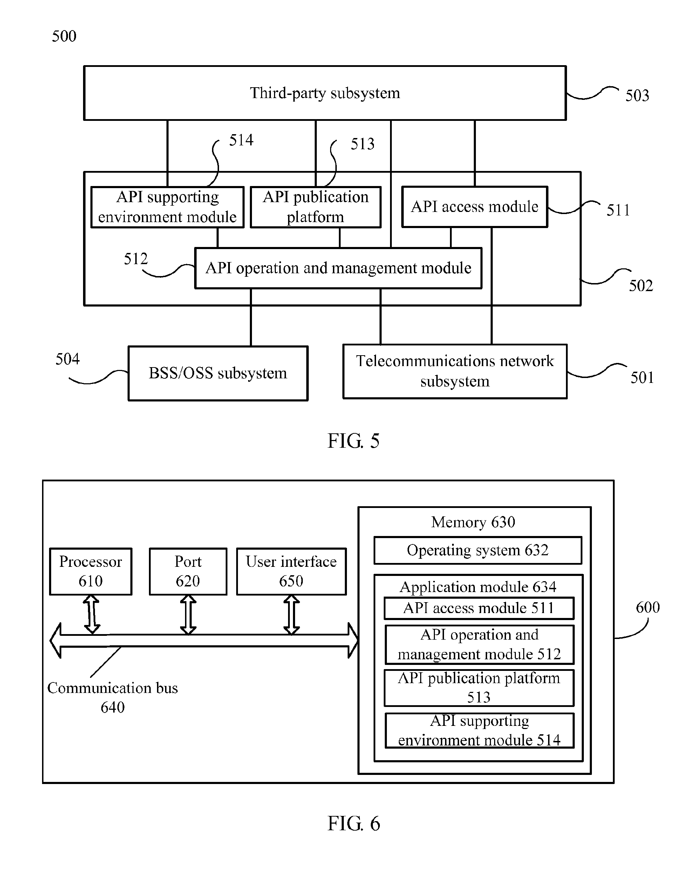

In combination with specific examples, the following describes specific examples of an API open subsystem of a system architecture for opening a telecommunications network capability in more detail. In the system architecture for opening a telecommunications network capability in FIG. 5, a description about the system architecture that is similar to a description about a system architecture for opening a telecommunications network capability in FIG. 1 is omitted properly.

FIG. 5 is a schematic structural diagram of a system architecture for opening a telecommunications network capability according to another embodiment of the present invention.

An API open subsystem 502 in a system architecture 500 for opening a telecommunications network capability in FIG. 5 includes an API access module 511 and an API operation and management module 512. The API access module 511 is configured to acquire a telecommunications network capability provided by a telecommunications network subsystem 501, and configured to provide an API of the telecommunications network capability for a third-party subsystem 503, so that the third-party subsystem 503 invokes, on the API access module 511, the API of the telecommunications network capability. The API operation and management module 512 is configured to operate and manage opening of the telecommunications network capability acquired by the API access module 511. The telecommunications network capability includes at least one of the following: a network customization capability, an API capability, and a hosting capability, and the API capability is the telecommunications network capability invoked by the third-party subsystem according to a requirement.

Based on the foregoing solution, the system architecture for opening a telecommunications network capability is further improved by using an API open subsystem to operate and manage opening of a telecommunications network capability, and the telecommunications network capability is classified, so that invoking by a third party subsystem can be convenient and flexible. Therefore, the system architecture for opening a telecommunications network capability provided in the present invention has wide applicability and is capable of improving market competitiveness of a telecommunications operator.

Optionally, as an embodiment, the API operation and management module 512 may be further configured to operate and manage the API of the telecommunications network capability, and/or further configured to operate and manage a third party.

Optionally, the API open subsystem 502 further includes an API publication platform 513. The API operation and management module 512 may be further configured to arrange and manage the telecommunications network capability, and send information about an API of the arranged and managed telecommunications network capability (such as a capability category to which the API belongs, an owned function, a using method, or an interface format) to the API publication platform 513. The API publication platform 513 registers and publishes the information about the API of the telecommunications network capability, so that the third-party subsystem 503 is configured to invoke, on the API access module 511, the API of the telecommunications network capability according to the information about the API of the telecommunications network capability that is published by the API publication platform 513. An interface protocol that may be used between the API publication platform 513 and the third-party subsystem 503 includes but is not limited to UDDI, WSDL, WADL, or the like.

Optionally, the API operation and management module 512 may further operate and manage information about subscription or registration that is performed by the third-party subsystem 103 on the API operation and management module 512, and after the third party completes the subscription, query, according to an API purchase or subscription request message sent by the third-party subsystem 503, whether API state information of the telecommunications network capability is available. The API operation and management module 512 may be further configured to return, according to the queried API state information, a result for purchasing the API of the telecommunications network capability to the third-party subsystem 503.

Optionally, the API operation and management module 512 may be further configured to perform deregistration or service cancellation for the API of the telecommunications network capability.

Optionally, as another embodiment, the API access module 511 may be further configured to receive an invocation request message of the API of the telecommunications network capability that is sent by the third-party subsystem 503, where the invocation request message includes information about the third party. The API operation and management module 512 may be further configured to perform authentication and authorization for the third party according to the information about the third party, and determine, according to a result of the authentication and authorization, whether the third-party subsystem 503 is allowed to invoke, on the API access module 511, the API of the telecommunications network capability. Further, the API access module 511 may be further configured to, after the API operation and management module determines that the third-party subsystem 503 is allowed to invoke, on the API access module 511, the API of the telecommunications network capability, route the invocation request message of the API of the telecommunications network capability and send the telecommunications network subsystem 501 the request message for invoking the API of the telecommunications network capability, so that the telecommunications network subsystem 501 routes the invocation request message of the API of the telecommunications network capability, and implements invoking of the API of the telecommunications network capability by the third-party subsystem 503 according to the invocation request message of the API of the telecommunications network capability. Optionally, conversion between different interface protocols may be implemented by the API access module 511, or conversion between different interface protocols may be implemented by the telecommunications network subsystem 501. Specifically, before sending the telecommunications network subsystem 501 the request message for invoking the API of the telecommunications network capability, the API access module 511 may be further configured to perform interface protocol conversion (that is, implementing conversion between different interface protocols) for the invocation request message of the API of the telecommunications network capability. Or, in a case that an interface adaptation module or a plug-in is built in the telecommunications network subsystem 501, before routing the invocation request message of the API of the telecommunications network capability that is sent by the API access module 511, the telecommunications network subsystem 501 may be further configured to perform interface protocol conversion for the invocation request message of the API of the telecommunications network capability.

Optionally, the API access module 511 may be further configured for the third-party subsystem 503 to define and apply for a network resource, and the API access module 511 sends a definition of and an application for the network resource to the telecommunications network subsystem 501, so that the telecommunications network subsystem 501 performs configuration for the network resource and provisioning of a service rule according to the definition of and the application for the network resource, and opens a service consistent with the network resource for the third-party subsystem 503. The network customization capability includes the definition of the network resource and the service rule. Preferably, an interface between the third-party subsystem 503 and the API access module 511 is implemented by using the HTTP protocol.

Optionally, the API access module 511 may be further configured for the third-party subsystem 503 to invoke, on the API access module 511, the API capability according to a service requirement (for example, implementing dynamic QoS control, acquiring network state information or context information, or performing charging). Preferably, the interface between the third-party subsystem 503 and the API access module 511 is implemented by using REST or SOAP.

Optionally, the API access module 511 may be further configured for the third-party subsystem 503 to invoke an API of the hosting capability, that is, the third-party subsystem 503 may use a hosting environment provided by the API access module 511; for example, the hosting capability may be a device, such as a server, provided by an application telecommunications network. The third-party subsystem 503 is further configured to use, on the API access module 511, the server to perform a calculation, resource storage, or the like.

Therefore, the third-party subsystem in the embodiment of the present invention is capable of invoking, on the API access module 511, the API of the telecommunications network capability conveniently and flexibly, and further capable of enriching customer service experience.

Optionally, as another embodiment, the API operation and management module 512 may be further configured to perform monitoring and statistics for a process of invoking the API of the telecommunications network capability by the third-party subsystem 503, so as to obtain statistical information, where the statistical information is used for service level agreement SLA management and/or charging. Further, the API operation and management module 512 may be further configured to determine charging information of the third party according to the statistical information, and send the charging information to a BSS or OSS subsystem 504, so that the BSS or OSS subsystem 504 performs charging for the third party according to the charging information.

Optionally, as another embodiment, the API open subsystem 502 may further include an API supporting environment module 514. The API supporting environment module 514 is configured to provide a supporting environment of the API of the telecommunications network capability for the third-party subsystem 503, where the supporting environment may include at least one of the following: an application development environment/test environment, an application execution environment, a document, a reference design, technical support, and a forum. An interface between the API supporting environment module 514 and the third-party subsystem 503 may be implemented by using a protocol, such as HTTP, UDDI, WSDL, or WADL.

Optionally, as another embodiment, the API access module 511 may further provide the API of the telecommunications network capability for the third-party subsystem 503 in a vertical open manner and/or in a horizontal open manner. The vertical open manner indicates that the third party is particular, and the horizontal open manner indicates that the third party is arbitrary. The particular third party may be a customer cooperating closely with a telecommunications operator, and the customer cooperating closely with a telecommunications operator may include at least one of the following: an enterprise customer, an industrial customer, a consumer of the telecommunications operator, and the like. In the horizontal open manner, the third party is arbitrary and may include the foregoing particular third party and may also include an uncertain third party, such as a long-tail-type service customer.

In this way, by using an open architecture and platform, the telecommunications operator is capable of applying network assets and capabilities more sufficiently and is capable of increasing commercial application value, thereby improving competitiveness in the industry chain.

In addition, functions, such as decoupling, network shielding, and protection, may also be implemented between different subsystems; for example, the telecommunications network subsystem 501 implements decoupling, network shielding, or the like between the telecommunications network subsystem 501 and the API open subsystem 502, thereby improving security of the system architecture for opening a telecommunications network capability in commercial use.

FIG. 6 is a schematic structural diagram of an API open subsystem according to another embodiment of the present invention.

As shown in FIG. 6, the API open subsystem 600 generally includes at least one processor 610, for example, a CPU, at least one port 620, a memory 630, and at least one communication bus 640. The communication bus 640 is configured to implement connections and communication between these apparatuses. The processor 610 is configured to execute an executable module, such as a computer program, stored in the memory 630. Optionally, the API open subsystem 600 may include a user interface 660, where the user interface 660 includes but is not limited to a display, a keyboard, and a clicking device, such as a mouse, a trackball (trackball), a touch panel, or a touchscreen. The memory 630 may include a high-speed RAM memory and may further include a non-volatile memory (non-volatile memory), for example, at least one disk memory.

In some implementation manners, the memory 630 stores the following elements, executable modules or data structures, or their subsets, or their extension sets:
an operating system 632, including various system programs and configured to implement various basic services and process a hardware-based task; and
an application module 634, including various application programs and configured to implement various application services.

The application module 634 includes but is not limited to an API access module 511, an API operation and management module 512, an API publication platform 513, and an API supporting environment module 514.

For specific implementation of each unit in the application module 634, refer to the related unit in an embodiment shown in FIG. 5. Details are not described herein again.

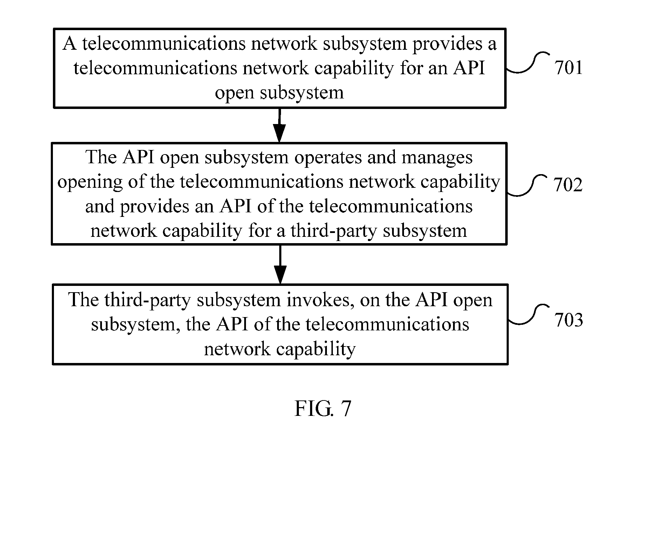

FIG. 7 is a flowchart of a method for opening a telecommunications network capability according to an embodiment of the present invention.

701: A telecommunications network subsystem provides a telecommunications network capability for an API open subsystem.

702: The API open subsystem operates and manages opening of the telecommunications network capability and provides an API of the telecommunications network capability for a third-party subsystem.

703: The third-party subsystem invokes, on the API open subsystem, the API of the telecommunications network capability.

The telecommunications network capability includes at least one of the following: a network customization capability, an API capability, and a hosting capability, and the API capability is the telecommunications network capability invoked by the third-party subsystem according to a requirement.

Based on the foregoing solution, the system architecture for opening a telecommunications network capability is further improved by using an API open subsystem to operate and manage opening of a telecommunications network capability, and the telecommunications network capability is classified, so that invoking by a third party subsystem can be convenient and flexible. Therefore, the system architecture for opening a telecommunications network capability provided in the present invention has wide applicability and is capable of improving market competitiveness of a telecommunications operator.

The method in FIG. 7 may be implemented by a system architecture for opening a telecommunications network capability in FIG. 1 to FIG. 6, and therefore a repeated description is omitted properly.

Optionally, as an embodiment, in step 702, the API open subsystem may operate and manage the API of the telecommunications network capability, and/or the API open subsystem 102 may operate and manage a third party.

Specifically, the API open subsystem arranges and manages the telecommunications network capability and registers and publishes information about an API of the arranged and managed telecommunications network capability, so that the third-party subsystem invokes, on the API open subsystem, the API of the telecommunications network capability according to the information about the API of the telecommunications network capability. Or, the API open subsystem operates and manages information about subscription or registration that is performed by the third-party subsystem on the API open subsystem. After the third party completes the subscription, the API open subsystem queries, according to an API purchase or subscription request message sent by the third-party subsystem, whether API state information of the telecommunications network capability is available, and returns, according to the API state information, a result for purchasing the API of the telecommunications network capability to the third-party subsystem. Or, the API open subsystem may perform deregistration or service cancellation for the API of the telecommunications network capability, and so on.

Optionally, as another embodiment, before step 703, the third-party subsystem may send an invocation request message of the API of the telecommunications network capability to the API open subsystem, where the invocation request message includes information about the third party. The API open subsystem may perform authentication and authorization for the third party according to the information about the third party, and determine, according to a result of the authentication and authorization, whether the third-party subsystem is allowed to invoke, on the API open subsystem, the API of the telecommunications network capability. Further, after determining that the third-party subsystem is allowed to invoke, on the API open subsystem, the API of the telecommunications network capability, the API open subsystem routes the invocation request message of the API of the telecommunications network capability and sends the telecommunications network subsystem the request message for invoking the API of the telecommunications network capability. The telecommunications network subsystem may route the invocation request message of the API of the telecommunications network capability that is sent by the API open subsystem, and implement invocation of the API of the telecommunications network capability by the third-party subsystem according to the invocation request message of the API of the telecommunications network capability. Optionally, before the API open subsystem sends the telecommunications network subsystem the request message for invoking the API of the telecommunications network capability, the API open subsystem may perform interface protocol conversion for the invocation request message of the API of the telecommunications network capability; or, after the API open subsystem sends the telecommunications network subsystem the request message for invoking the API of the telecommunications network capability, the telecommunications network subsystem may perform interface protocol conversion for the invocation request message of the API of the telecommunications network capability.

Optionally, as another embodiment, in step 703, in an implementation manner, the third-party subsystem may define and apply for, on the API open subsystem, a network resource. The API open subsystem sends a definition of and an application for the network resource to the telecommunications network subsystem. The telecommunications network subsystem performs configuration for the network resource and provisioning of a service rule according to the definition of and the application for the network resource, and opens a service consistent with the network resource for the third-party subsystem. The network customization capability includes the definition of the network resource and the service rule. In another implementation manner, the third-party subsystem may invoke, on the API open subsystem, an API of the API capability according to a service requirement, where the API capability includes an information-type capability and/or a control-type capability. In still another implementation manner, the third-party subsystem may use, on the API open subsystem, an API of the hosting capability to perform a calculation or resource storage. It should be understood that the embodiment of the present invention does not limit a manner for the third-party subsystem to invoke the API of the telecommunications network capability.

Optionally, the API open subsystem may perform monitoring and statistics for a process of invoking the API of the telecommunications network capability by the third-party subsystem, so as to obtain statistical information, where the statistical information is used for SLA management and/or charging. Further, the API open subsystem may determine charging information of the third party according to the statistical information and send the charging information to a BSS or OSS subsystem, and the BSS or OSS subsystem performs charging for the third party according to the charging information.

Optionally, as another embodiment, the API open subsystem may provide a supporting environment of the API of the telecommunications network capability for the third-party subsystem, where the supporting environment may include at least one of the following: an application development environment/test environment, an application execution environment, a document, a reference design, technical support, and a forum.

Optionally, as another embodiment, in step 702, the API open subsystem may provide the API of the telecommunications network capability for the third-party subsystem in a vertical open manner and/or in a horizontal open manner. The vertical open manner indicates that the third party is particular, and the horizontal open manner indicates that the third party is arbitrary. The particular third party may be a customer cooperating closely with a telecommunications operator, and the customer cooperating closely with a telecommunications operator includes at least one of the following: an enterprise customer, an industrial customer, and a consumer of the telecommunications operator.

In this way, by using an open architecture and platform, the telecommunications operator is capable of applying network assets and capabilities more sufficiently and is capable of increasing commercial application value, thereby improving competitiveness in the industry chain.

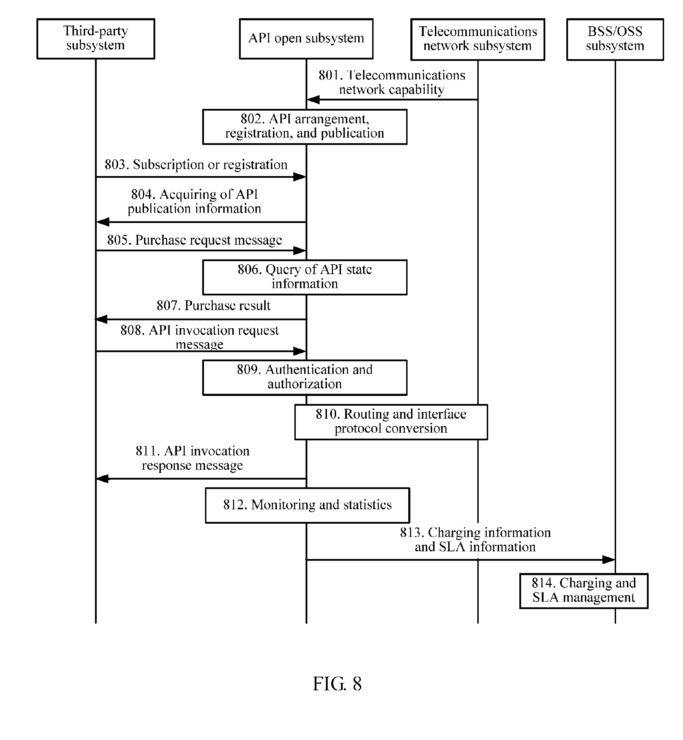

FIG. 8 is a schematic flowchart of a process of a method for opening a telecommunications network capability according to an embodiment of the present invention. The method in FIG. 8 may be implemented by a system architecture for opening a telecommunications network capability in FIG. 1 to FIG. 6, and therefore a repeated description is omitted properly.

801: A telecommunications network subsystem provides a telecommunications network capability for an API open subsystem.

Optionally, conversion between a telecommunications network capability and a corresponding API may be implemented by the telecommunications network subsystem. It should be understood that the embodiment of the present invention sets no limitation thereto and the telecommunications network capability may also be converted into a corresponding API of the telecommunications network capability by the API open subsystem 102.

Optionally, an interface protocol that may be used by a first interface between the telecommunications network subsystem and the API open subsystem includes but is not limited to GTP, SOAP, REST, MAP, XMPP, the Diameter protocol, or the like, which implements transfer of the telecommunications network capability to the API open subsystem.

802: The API open subsystem arranges, registers, and publishes the telecommunications network capability.

For example, the API open subsystem arranges and combines multiple telecommunications network capabilities into one or more APIs.

Optionally, information about an API of the arranged and managed telecommunications network capability (such as a capability category to which the API belongs, an owned function, or a using method) is registered and published. Or, information about an API of the arranged and managed telecommunications network capability is sent to an API registration and publication platform. An interface protocol that may be used between the API open subsystem and the API registration and publication platform includes but is not limited to UDDI, WSDL, WADL, or the like. The information about the API of the telecommunications network capability may also be registered and published on the API registration and publication platform by using a manual setting manner. It should be understood that the present invention sets no limitation thereto.

803: A third-party subsystem performs subscription or registration on the API open subsystem.

The API open subsystem records subscription information of the third-party subsystem and sends an authentication credential, such as a user name or a password, to the third-party subsystem.

804: The third-party subsystem acquires, on the API open subsystem, API publication information.

Optionally, the third-party subsystem may further acquire, on the API registration and publication platform, the API publication information. An interface protocol that may be used between the API registration and publication platform and the third-party subsystem includes but is not limited to UDDI, WSDL, WADL, or the like.

805: The third-party subsystem purchases, on the API open subsystem, the API of the telecommunications network capability.

The third-party subsystem sends a purchase request message of the API of the telecommunications network capability to the API open subsystem.

806: The API open subsystem queries API state information of the telecommunications network capability.

The API open subsystem queries, according to the purchase request message of the API of the telecommunications network capability that is sent by the third-party subsystem, whether the API state information of the telecommunications network capability is available.

807: The API open subsystem returns a purchase result to the third-party subsystem.

Optionally, if the API state information is available, a purchase result returned to the third-party subsystem is that the purchase succeeds, and the third-party subsystem may perform step 807; if the API state information is unavailable, a purchase result returned to the third-party subsystem is that the purchase fails.

808: The third-party subsystem sends an invocation request message of the API of the telecommunications network capability to the API open subsystem, where the invocation request message includes information about the third party.

809: The API open subsystem performs authentication and authorization for the third party according to the information about the third party.

It is determined, according to a result of the authentication and authorization, whether the third-party subsystem is allowed to invoke, on the API open subsystem, the API of the telecommunications network capability. Optionally, if a determined result is that the third-party subsystem is allowed to invoke, on the API open subsystem, the API of the telecommunications network capability, the API open subsystem may perform step 810.

810: The API open subsystem routes the invocation request message of the API of the telecommunications network capability.

Optionally, the API open subsystem routes the invocation request message of the API of the telecommunications network capability; if the API is an API of multiple combined telecommunications network capabilities, the multiple telecommunications network capabilities may be separately acquired according to API arrangement and management information, and the request message for invoking the API of the telecommunications network capability is sent to the telecommunications network subsystem. The telecommunications network subsystem may be further configured to route the invocation request message of the API of the telecommunications network capability sent by the API open subsystem, find a telecommunications network device (such as an RNC or a GGSN) in which the telecommunications network capability corresponding to the API requested by the third-party subsystem resides, and implement invocation of the API of the telecommunications network capability by the third-party subsystem according to the invocation request message of the API of the telecommunications network capability.

Optionally, when interface protocols are different, interface protocol conversion of the first interface may be implemented by the API open subsystem, or interface protocol conversion of the first interface may be implemented by the telecommunications network subsystem.

Specifically, before sending the request message for invoking the API of the telecommunications network capability to the telecommunications network subsystem, the API open subsystem performs interface protocol conversion for the invocation request message of the API of the telecommunications network capability. Or, in a case that an interface adaptation module or a plug-in is built in the telecommunications network subsystem, before routing the invocation request message of the API of the telecommunications network capability that is sent by the API open subsystem, the telecommunications network subsystem performs interface protocol conversion for the invocation request message of the API of the telecommunications network capability.

811: The API open subsystem returns an invocation response message to the third-party subsystem.

The third-party subsystem implements invoking of the API of the telecommunications network capability according to the invocation response message.

For example, in a case that the telecommunications network capability is the hosting capability, the third-party subsystem uses, on the API open subsystem, the hosting capability to perform a calculation, resource storage, or the like.

For another example, in a case that the telecommunications network capability is the network customization capability, in step 808, the invocation request message of the API of the telecommunications network capability that is sent by the third-party subsystem includes a definition of and an application for a network resource, and the third-party subsystem acquires a service consistent with the network resource.

For still another example, in a case that the telecommunications network capability is the API capability, in step 808, the third-party subsystem sends the invocation request message of the API of the telecommunications network capability according to a service requirement, and the third-party subsystem may be a service application device and, according to an API of the API capability in the invocation response message, implements dynamic QoS control, acquires network state information or context information, or performs charging.

812: The API open subsystem performs monitoring and statistics for a process of invoking the API of the telecommunications network capability by the third-party subsystem, so as to obtain statistical information.

Optionally, the statistical information may be used for SLA management and/or charging.

813: The API open subsystem sends SLA information and charging information to a BSS or OSS subsystem.

814: The BSS or OSS subsystem performs charging and SLA management.

The BSS or OSS subsystem performs charging for the third party according to the charging information (for example, performing account reconciliation, settlement, or bill processing for the third party). CRM of the BSS or OSS subsystem performs the SLA management, including but not limited to estimation about the API of the telecommunications network capability, processing of a customer complaint, or the like.

In addition, the API open subsystem may perform deregistration or service cancellation for the API of the telecommunications network capability. For example, when the number of times an API of a telecommunications network capability is invoked is very small and the telecommunications network subsystem no longer provides the telecommunications network capability, the API open subsystem performs deregistration or service cancellation for the API of the telecommunications network capability.

Based on the foregoing solution, the system architecture for opening a telecommunications network capability is further improved by using an API open subsystem to operate and manage opening of a telecommunications network capability, and the telecommunications network capability is classified, so that invoking by a third party subsystem can be convenient and flexible. Therefore, the system architecture for opening a telecommunications network capability provided in the present invention has wide applicability and is capable of improving market competitiveness of a telecommunications operator.

A person of ordinary skill in the art may be aware that, in combination with the examples described in the embodiments disclosed in this specification, units and algorithm steps may be implemented by electronic hardware, or a combination of computer software and electronic hardware. Whether the functions are performed by hardware or software depends on particular applications and design constraint conditions of the technical solution. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiments are merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and the parts displayed as units may or may not be physical units, may be located in one position, or may be distributed on a plurality of network units. A part of or all of the units may be selected according to actual needs to achieve the objectives of the solutions of the embodiments.

In addition, functional units in the embodiments of the present invention may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of the present invention essentially, or the part contributing to the prior art, or a part of the technical solutions may be implemented in a form of a software product. The computer software product is stored in a storage medium and includes several instructions for instructing a computer device (which may be a personal computer, a server, or a network device) to perform all or a part of the steps of the methods described in the embodiments of the present invention. The foregoing storage medium includes: any mediums that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific embodiments of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the appended claims

## Claims

1. A system architecture for opening a telecommunications network capability, comprising an application programming interface API open subsystem, a telecommunications network subsystem, and a third-party subsystem, wherein a first interface exists between the telecommunications network subsystem and the API open subsystem, and a second interface exists between the API open subsystem and the third-party subsystem;
the telecommunications network subsystem is configured to provide a telecommunications network capability for the API open subsystem;
the API open subsystem is configured to operate and manage opening of the telecommunications network capability and provide an API of the telecommunications network capability for the third-party subsystem; and
the third-party subsystem is configured to invoke, on the API open subsystem, the API of the telecommunications network capability; wherein:
the telecommunications network capability comprises at least one of the following: a network customization capability, an API capability, and a hosting capability, and the API capability is the telecommunications network capability invoked by the third-party subsystem according to a requirement.

2. The system according to claim 1, wherein:
the API open subsystem is further configured to operate and manage the API of the telecommunications network capability, and/or further configured to operate and manage the third party.

3. The system according to claim 2, wherein:
the API open subsystem is further configured to arrange and manage the telecommunications network capability and register and publish information about an API of the arranged and managed telecommunications network capability; and
the third-party subsystem is further configured to acquire, on the API open subsystem, the information about the API of the telecommunications network capability and invoke, on the API open subsystem, the API of the telecommunications network capability according to the information about the API of the telecommunications network capability;
or
the system architecture for opening a telecommunications network capability further comprises an API registration and publication platform;
the API open subsystem is further configured to arrange and manage the telecommunications network capability, and send information about an API of the arranged and managed telecommunications network capability to the API registration and publication platform;
the API registration and publication platform is configured to register and publish the information about the API of the telecommunications network capability; and
the third-party subsystem is further configured to acquire, on the API registration and publication platform, the information about the API of the telecommunications network capability and invoke, on the API open subsystem, the API of the telecommunications network capability according to the information about the API of the telecommunications network capability.

4. The system according to claim 2 or 3, wherein:
the API open subsystem is further configured to operate and manage information about subscription or registration that is performed by the third-party subsystem on the API open subsystem;
the third-party subsystem is further configured to send an API purchase or subscription request message to the API open subsystem after the subscription or the registration is complete; and
the API open subsystem is further configured to query, according to the API purchase or subscription request message sent by the third-party subsystem, whether API state information of the telecommunications network capability is available, and return, according to the API state information, a result for purchasing the API of the telecommunications network capability to the third-party subsystem.

5. The system according to any one of claims 1 to 4, wherein:
the third-party subsystem is further configured to send an invocation request message of the API of the telecommunications network capability to the API open subsystem before invoking, on the API open subsystem, the API of the telecommunications network capability, wherein the invocation request message comprises information about the third party; and
the API open subsystem is further configured to perform authentication and authorization for the third party according to the information about the third party, and determine, according to a result of the authentication and authorization, whether the third-party subsystem is allowed to invoke, on the API open subsystem, the API of the telecommunications network capability.

6. The system according to claim 5, wherein:
the API open subsystem is further configured to, after determining that the third-party subsystem is allowed to invoke, on the API open subsystem, the API of the telecommunications network capability, route the invocation request message of the API of the telecommunications network capability and send the telecommunications network subsystem the request message for invoking the API of the telecommunications network capability; and
the telecommunications network subsystem is further configured to route the invocation request message of the API of the telecommunications network capability that is sent by the API open subsystem, and implement invocation of the API of the telecommunications network capability by the third-party subsystem according to the invocation request message of the API of the telecommunications network capability.

7. The system according to claim 6, wherein:
the API open subsystem is further configured to perform interface protocol conversion for the invocation request message of the API of the telecommunications network capability before sending the request message for invoking the API of the telecommunications network capability to the telecommunications network subsystem; or
in a case that an interface adaptation module or a plug-in is built in the telecommunications network subsystem, the telecommunications network subsystem is further configured to perform interface protocol conversion for the invocation request message of the API of the telecommunications network capability.

8. The system according to any one of claims 1 to 7, wherein:
the third-party subsystem is further configured to define and apply for, on the API open subsystem, a network resource;
the API open subsystem is further configured to send a definition of and an application for the network resource to the telecommunications network subsystem; and
the telecommunications network subsystem is further configured to perform configuration for the network resource and provisioning of a service rule according to the definition of and the application for the network resource, and open a service consistent with the network resource configuration to the third-party subsystem; wherein:
the network customization capability comprises the definition of the network resource.

9. The system according to any one of claims 1 to 8, wherein:
the third-party subsystem is further configured to invoke, on the API open subsystem, an API of the API capability according to a service requirement, wherein the API capability comprises an information-type capability and/or a control-type capability.

10. The system according to any one of claims 1 to 9, wherein:
the third-party subsystem is further configured to use, on the API open subsystem, an API of the hosting capability to perform a calculation or resource storage.

11. The system according to any one of claims 1 to 10, wherein:
the API open subsystem is further configured to perform monitoring and statistics for a process of invoking the API of the telecommunications network capability by the third-party subsystem, so as to obtain statistical information, wherein the statistical information is used for service level agreement SLA management and/or charging.

12. The system according to claim 11, wherein the system further comprises a business support system BSS or operation support system OSS subsystem, and a third interface exists between the API open subsystem and the BSS or OSS subsystem;
the API open subsystem is further configured to determine charging information of the third party according to the statistical information, and send the charging information to the BSS or OSS subsystem; and the BSS or OSS subsystem performs charging for the third party according to the charging information.

13. The system according to claims 1 to 12, wherein:
the API open subsystem is further configured to perform deregistration or service cancellation for the API of the telecommunications network capability.

14. The system according to claims 1 to 11, wherein:
the API open subsystem is further configured to provide a supporting environment of the API of the telecommunications network capability for the third-party subsystem, wherein the supporting environment comprises at least one of the following: an application development environment/test environment, an application execution environment, a document, a reference design, technical support, and a forum.

15. The system according to claims 1 to 14, wherein:
the API open subsystem is further configured to provide the API of the telecommunications network capability for the third-party subsystem in a vertical open manner and/or in a horizontal open manner, wherein:
the vertical open manner indicates that the third party is particular, and the horizontal open manner indicates that the third party is arbitrary.

16. The system according to claim 15, wherein:
the particular third party may be a customer cooperating closely with a telecommunications operator, and the customer cooperating closely with a telecommunications operator comprises at least one of the following: an enterprise customer, an industrial customer, and a consumer of the telecommunications operator.

17. An API open subsystem, comprising:
an API access module, configured to acquire a telecommunications network capability provided by a telecommunications network subsystem, and configured to provide an API of the telecommunications network capability for a third-party subsystem, so that the third-party subsystem invokes, on the API access module, the API of the telecommunications network capability;
an API operation and management module, configured to operate and manage opening of the telecommunications network capability acquired by the API access module; wherein:
the telecommunications network capability comprises at least one of the following: a network customization capability, an API capability, and a hosting capability, and the API capability is the telecommunications network capability invoked by the third-party subsystem according to a requirement.

18. The API open subsystem according to claim 17, wherein:
the API operation and management module is further configured to operate and manage the API of the telecommunications network capability, and/or further configured to operate and manage the third party.

19. The API open subsystem according to claim 18, wherein the API open subsystem further comprises an API publication platform;
the API operation and management module is further configured to arrange and manage the telecommunications network capability; and
the API publication platform is configured to register and publish information about an API of the arranged and managed telecommunications network capability, so that the third-party subsystem invokes, on the API open subsystem, the API of the telecommunications network capability according to the information about the API of the telecommunications network capability.

20. The API open subsystem according to claim 18 or 19, wherein:
the API operation and management module is further configured to operate and manage information about subscription or registration that is performed by the third-party subsystem on the API operation and management module, and after the third party completes the subscription or the registration, query, according to an API purchase or subscription request message sent by the third-party subsystem, whether API state information of the telecommunications network capability is available; and
the API operation and management module is further configured to return, according to the queried API state information, a result for purchasing the API of the telecommunications network capability to the third-party subsystem.

21. The API open subsystem according to any one of claims 17 to 20, wherein:
the API access module is further configured to receive an invocation request message of the API of the telecommunications network capability that is sent by the third-party subsystem, wherein the invocation request message comprises information about the third party; and
the API operation and management module is further configured to perform authentication and authorization for the third party according to the information about the third party, and determine, according to a result of the authentication and authorization, whether the third-party subsystem is allowed to invoke, on the API access module, the API of the telecommunications network capability.

22. The API open subsystem according to claim 21, wherein:
the API access module is further configured to, after the API operation and management module determines that the third-party subsystem is allowed to invoke, on the API access module, the API of the telecommunications network capability, route the invocation request message of the API of the telecommunications network capability and send the telecommunications network subsystem the request message for invoking the API of the telecommunications network capability, so that the telecommunications network subsystem routes the invocation request message of the API of the telecommunications network capability, and implements invoking of the API of the telecommunications network capability by the third-party subsystem according to the invocation request message of the API of the telecommunications network capability.

23. The API open subsystem according to claim 22, wherein:
the API access module is further configured to perform interface protocol conversion for the invocation request message of the API of the telecommunications network capability before sending the request message for invoking the API of the telecommunications network capability to the telecommunications network subsystem.

24. The API open subsystem according to any one of claims 17 to 23, wherein:
the API access module is further configured for the third-party subsystem to define and apply for a network resource, and sends a definition of and an application for the network resource to the telecommunications network subsystem, so that the telecommunications network subsystem performs configuration for the network resource and provisioning of a service rule according to the definition of and the application for the network resource, and opens a service consistent with the network resource configuration to the third-party subsystem, wherein the network customization capability comprises the definition of the network resource; or
the API access module is further configured for the third-party subsystem to invoke, on the API access module, the API capability according to a service requirement, wherein the API capability comprises an information-type capability and/or a control-type capability; and
the API access module is further configured for the third-party subsystem to use, on the API access module, the hosting capability to perform a calculation or resource storage.

25. The API open subsystem according to any one of claims 17 to 24, wherein:
the API operation and management module is further configured to perform monitoring and statistics for a process of invoking the API of the telecommunications network capability by the third-party subsystem, so as to obtain statistical information, wherein the statistical information is used for service level agreement SLA management and/or charging.

26. The API open subsystem according to claims 17 to 25, wherein:
the API operation and management module is further configured to perform deregistration or service cancellation for the API of the telecommunications network capability.

27. The API open subsystem according to claims 17 to 26, wherein the API open subsystem further comprises an API supporting environment module; and
the API supporting environment module is further configured to provide a supporting environment of the API of the telecommunications network capability for the third-party subsystem, wherein the supporting environment comprises at least one of the following: an application development environment/test environment, an application execution environment, a document, a reference design, technical support, and a forum.

28. The API open subsystem according to claims 1 to 14, wherein:
the API access module is further configured to provide the API of the telecommunications network capability for the third-party subsystem in a vertical open manner and/or in a horizontal open manner, wherein:
the vertical open manner indicates that the third party is particular, and the horizontal open manner indicates that the third party is arbitrary.

29. A method for opening a telecommunications network capability, comprising:
providing, by a telecommunications network subsystem, a telecommunications network capability for an API open subsystem;
operating and managing, by the API open subsystem, opening of the telecommunications network capability, and providing an API of the telecommunications network capability for the third-party subsystem; and
invoking, by the third-party subsystem and on the API open subsystem, the API of the telecommunications network capability; wherein:
the telecommunications network capability comprises at least one of the following: a network customization capability, an API capability, and a hosting capability, and the API capability is the telecommunications network capability invoked by the third-party subsystem according to a requirement.

30. The method according to claim 29, wherein the operating and managing, by the API open subsystem, opening of the telecommunications network capability comprises:
operating and managing, by the API open subsystem, the API of the telecommunications network capability, and/or operating and managing the third party.

31. The method according to claim 30, wherein:
the operating and managing, by the API open subsystem, the API of the telecommunications network capability comprises:
arranging and managing, by the API open subsystem, the telecommunications network capability, and registering and publishing information about an API of the arranged and managed telecommunications network capability; and
acquiring, by the third-party subsystem and on the API open subsystem, the information about the API of the telecommunications network capability, and invoking, on the API open subsystem, the API of the telecommunications network capability according to the information about the API of the telecommunications network capability;
or
arranging and managing, by the API open subsystem, the telecommunications network capability, and sending information about an API of the arranged and managed telecommunications network capability to the API registration and publication platform;
registering and publishing, by the API registration and publication platform, the information about the API of the telecommunications network capability; and
acquiring, by the third-party subsystem and on the API registration and publication platform, the information about the API of the telecommunications network capability, and invoking, on the API open subsystem, the API of the telecommunications network capability according to the information about the API of the telecommunications network capability.

32. The method according to claim 30 or 31, wherein:
the operating and managing, by the API open subsystem, the third party comprises:
operating and managing, by the API open subsystem, information about subscription or registration that is performed by the third-party subsystem on the API open subsystem;
sending, by the third-party subsystem, an API purchase or subscription request message to the API open subsystem after the subscription or the registration is complete; and
querying, by the API open subsystem according to the API purchase or subscription request message sent by the third-party subsystem, whether API state information of the telecommunications network capability is available; and
after operating and managing, by the API open subsystem, the third party, the method further comprises:
returning, according to the API state information, a result for purchasing the API of the telecommunications network capability to the third-party subsystem.

33. The method according to any one of claims 29 to 32, before invoking, by the third-party subsystem and on the API open subsystem, the API of the telecommunications network capability, further comprising:
sending, by the third-party subsystem, an invocation request message of the API of the telecommunications network capability to the API open subsystem, wherein the invocation request message comprises information about the third party; and
performing, by the API open subsystem, authentication and authorization for the third party according to the information about the third party, and determining, according to a result of the authentication and authorization, whether the third-party subsystem is allowed to invoke, on the API open subsystem, the API of the telecommunications network capability.

34. The method according to claim 33, further comprising:
after determining that the third-party subsystem is allowed to invoke, on the API open subsystem, the API of the telecommunications network capability, routing, by the API open subsystem, the invocation request message of the API of the telecommunications network capability, and sending the request message for invoking the API of the telecommunications network capability to the telecommunications network subsystem; and
routing, by the telecommunications network subsystem, the invocation request message of the API of the telecommunications network capability that is sent by the API open subsystem, and implementing invoking of the API of the telecommunications network capability by the third-party subsystem according to the invocation request message of the API of the telecommunications network capability.

35. The method according to claim 34, before sending, by the API open subsystem, the telecommunications network subsystem the request message for invoking the API of the telecommunications network capability, further comprising:
performing, by the API open subsystem, interface protocol conversion for the invocation request message of the API of the telecommunications network capability.

36. The method according to claim 34, after sending, by the API open subsystem, the telecommunications network subsystem the request message for invoking the API of the telecommunications network capability, further comprising:
performing, by the telecommunications network subsystem, interface protocol conversion for the invocation request message of the API of the telecommunications network capability.

37. The method according to any one of claims 29 to 36, wherein the invoking, by the third-party subsystem and on the API open subsystem, the API of the telecommunications network capability comprises:
defining and applying for, by the third-party subsystem and on the API open subsystem, a network resource;
sending, by the API open subsystem, a definition of and an application for the network resource to the telecommunications network subsystem; and
performing, by the telecommunications network subsystem, configuration for the network resource and provisioning of a service rule according to the definition of and the application for the network resource, and opening a service consistent with the network resource configuration to the third-party subsystem; wherein:
the network customization capability comprises the definition of the network resource.

38. The method according to any one of claims 29 to 37, wherein the invoking, by the third-party subsystem and on the API open subsystem, the API of the telecommunications network capability comprises:
invoking, by the third-party subsystem and on the API open subsystem, an API of the API capability according to a service requirement, wherein the API capability comprises an information-type capability and/or a control-type capability.

39. The method according to any one of claims 29 to 38, wherein the invoking, by the third-party subsystem and on the API open subsystem, the API of the telecommunications network capability comprises:
using, by the third-party subsystem and on the API open subsystem, an API of the hosting capability to perform a calculation or resource storage.

40. The method according to any one of claims 29 to 39, wherein the operating and managing, by the API open subsystem, the API of the telecommunications network capability and the third party comprises:
performing, by the API open subsystem, monitoring and statistics for a process of invoking the API of the telecommunications network capability by the third-party subsystem, so as to obtain statistical information, wherein the statistical information is used for service level agreement SLA management and/or charging.

41. The method according to claim 40, further comprising:
determining, by the API open subsystem, charging information of the third party according to the statistical information, and sending the charging information to a business support system BSS or operation support system OSS subsystem; and
performing, by the BSS or OSS subsystem, charging for the third party according to the charging information.

42. The method according to claims 29 to 41, further comprising:
performing, by the API open subsystem, deregistration or service cancellation for the API of the telecommunications network capability.

43. The method according to claims 29 to 42, further comprising:
providing, by the API open subsystem, a supporting environment of the API of the telecommunications network capability for the third-party subsystem, wherein the supporting environment comprises at least one of the following: an application development environment/test environment, an application execution environment, a document, a reference design, technical support, and a forum.

44. The method according to claims 29 to 43, wherein the providing, by the API open subsystem, an API of the telecommunications network capability for the third-party subsystem comprises:
providing, by the API open subsystem, the API of the telecommunications network capability for the third-party subsystem in a vertical open manner and/or in a horizontal open manner, wherein:
the vertical open manner indicates that the third party is particular, and the horizontal open manner indicates that the third party is arbitrary.

45. The method according to claim 44, wherein the particular third party is a customer cooperating closely with a telecommunications operator, and the customer cooperating closely with a telecommunications operator comprises at least one of the following: an enterprise customer, an industrial customer, and a consumer of the telecommunications operator.
